# EUROPÄISCHE PATENTSCHRIFT

(11) **EP 2 639 936 B1**
(45) Veröffentlichungstag und Bekanntmachung des Hinweises auf die Patenterteilung: **29.04.2015**
(21) Anmeldenummer: 12159926.0
(22) Anmeldetag: 16.03.2012
(51) Int. Cl.: H02K 1/27

(54) **Elektrische Maschine mit permanent erregtem Läufer und zugehöriger permanent erregter Läufer**
Electrical machine with permanently excited rotor and permanently excited rotor
Machine électrique à rotor excité en permanence et rotor excité en permanence correspondant

(43) Veröffentlichungstag der Anmeldung: 18.09.2013
(73) Patentinhaber: Siemens Aktiengesellschaft, 80333 München (DE)
(72) Erfinder: Vollmer, Rolf, 36129 Gersfeld (DE)

(56) Entgegenhaltungen:
- EP-A1- 1 416 617
- GB-A- 1 487 877
- US-A1- 2007 267 930

## Beschreibung

Die Erfindung betrifft eine elektrische Maschine mit einem Stator und einem Läufer, wobei der Läufer als magnetisch aktiven Teil Permanentmagneten sowie zwischen diesen angeordnete weichmagnetische Flussleitelemente umfasst. Im Zusammenhang mit der Erfindung ist unter einer elektrischen Maschine insbesondere eine solche mit Rotor zu verstehen und hierbei bevorzugt eine Synchronmaschine und ein Servomotor. Die erfindungsgemäße elektrische Maschine eignet sich insbesondere als Antrieb für ein Elektrofahrzeug. Die Erfindung kann aber auch mit einem Linearmotor realisiert werden.

Als magnetisch aktiver Teil des Läufers wird hier und im Folgenden derjenige Bestandteil des Läufers verstanden, der in einem signifikanten Ausmaß an der eigentlichen magnetischen Wechselwirkung zwischen Stator und Läufer über den Luftspalt der elektrischen Maschine beteiligt ist. Davon abzugrenzen ist derjenige Teil des Läufers, welcher den magnetisch aktiven Teil lediglich trägt und einer mechanischen Kraftübertragung dient, also im Falle eines Rotors beispielsweise dessen Welle. Zu der Erfindung gehört auch ein Läufer für eine elektrische Maschine, welcher durch Permanentmagneten permanenterregt ist.

Um bei vorgegebenem Bauraum mittels einer elektrischen Maschine im Motorbetrieb ein möglichst großes Drehmoment erzeugen zu können, besteht eine Lösung in der Bereitstellung einer möglichst großen magnetischen Flussdichte im Bereich des Luftspalts zwischen Stator und Läufer der elektrischen Maschine. Beispielsweise ist es bei Elektrofahrzeugen nötig, bei einem Antriebsmotor eine Flussdichte mit einem Betrag von durchschnittlich 0,6 Tesla bis 0,8 Tesla im Luftspalt bereitzustellen. Im Falle eines Generators ergibt sich dieselbe Lösung in Bezug auf das Erzeugen einer elektrischen Spannung. Bei permanenterregten Läufern, d.h. Läufern ohne elektrische Erregung über Spulen, bei denen das Läufermagnetfeld ausschließlich über Permanentmagneten erzeugt wird, kann eine möglichst große Flussdichte über eine entsprechend große Anzahl von Permanentmagneten erzeugt werden. Hierzu kann es notwendig sein, im Läufer eine große Polzahl vorzusehen. Dies wiederum führt zu dem Problem, das bei schnell wechselnden Statorfeldern, also z.B. bei hohen Drehzahlen, eine hohe Ummagnetisierungsfrequenz im Läufer und im Stator resultiert. Bei dem Beispiel eines Antriebsmotors für ein Elektrofahrzeug muss der Rotor im Bereich zwischen 5000 und 10000 Umdrehungen pro Minute rotieren können. Dies kann große Wirbelströme und somit eine hohen Erwärmung der elektrischen Maschine verursachen.

Im Dokument EP 1 416 617 Alist ein Rotor für eine elektrische Maschine beschrieben, bei welchem Permanentmagneten sternförmig an einer Welle angeordnet sind und zwischen den Permanentmagneten jeweils Blechsegmente als Flussleitelemente angeordnet sind. An Stirnseiten jedes zweiten Blechsegments sind Permanentmagneten angeordnet; an den dazwischen liegenden Blechsegmenten befindet sich jeweils ein magnetisch leitfähiges Element. Die Blechsegmente und die zwischen diesen angeordneten Permanentmagneten bilden jeweils eine magnetische Einheit, wobei die magnetischen Einheiten untereinander magnetisch voneinander unabhängig sind. Wird der Rotor in einen Stator eingebaut, bilden sich drei magnetische Kreise die alle drei in stirnseitigen Abschlussblechen des Rotors ausschließlich in radialer Richtung verlaufen.

Im Dokument GB 1 487 877 A ist ein Rotor beschrieben, bei welchem sternförmig um eine Welle angeordnete Permanentmagneten einen magnetischen Fluss in Flussleitelemente einspeisen, welche jeweils zwischen den Permanentmagneten angeordnet sind. Radial unterhalb jedes Flussleitelements, also zwischen jedem Flussleitelement und der Welle, befindet sich jeweils ein weiterer Permanentmagnet, welcher ebenfalls einen magnetischen Fluss in das jeweilige Flussleitelement einspeist.

Im Dokument US 2007/267930 A1 ist ein Rotor für eine elektrische Maschine beschrieben, bei welchem Permanentmagneten sternförmig um eine Welle angeordnet sind und zwischen den Permanentmagneten weichmagnetische Flussleitelemente angeordnet sind. Der Rotor ragt in axialer Richtung entlang der Rotationsachse des Rotors über den Stator einer elektrischen Maschine hinaus, in welchem der Rotor eingebaut ist.

Eine Aufgabe der vorliegenden Erfindung besteht darin, bei einer elektrischen Maschine die Übertragung eines großen Drehmoments auch bei großen Drehzahlen zu ermöglichen.

Die Aufgabe wird durch eine elektrische Maschine gemäß Patentanspruch 1 und einen Läufer gemäß Patentanspruch 7 gelöst. Vorteilhafte Weiterbildungen der Erfindung sind durch die Unteransprüche gegeben.

Die vorliegende Erfindung ermöglicht es, eine hohe magnetische Luftspaltinduktion, d.h. Flussdichte, bei verhältnismäßig geringer Polzahl bereitzustellen. Hierzu ist grundsätzlich das Aktivteil des Läufers länger ausgestaltet als das des Ständers oder Stators. Der magnetische aktive Teil des Läufers umfasst hierbei Permanentmagneten sowie zwischen diesen angeordnete weichmagnetische Flussleitelemente, welche den von den Permanentmagneten erzeugten magnetischen Fluss leiten. Dieser magnetisch aktive Teil des Läufers ist nun in zumindest einer Erstreckungsrichtung länger als eine weichmagnetische Flussleiteinrichtung eines magnetisch aktiven Teils des Stators in dieser Erstreckungsrichtung. Diese weichmagnetische Flussleiteinrichtung des Stators ist in der Regel ein Blechpaket, in welchem elektrische Spulen des Stators eingebettet sind.

Der hier beschriebenen Ausgestaltung der elektrischen Maschine liegt die Erkenntnis zugrunde, dass ein magnetisches Feld, das aus dem über den Stator hinausragenden Teil des Läufers aus dessen magnetisch aktiven Teil austritt, nicht unbedingt als Streufeld wirkt, also ohne Nutzen für die Drehmomentübertragung. Stattdessen verlaufen Feldlinien des Feldes von dem überstehenden Teil des Läufers aus zum Rand des Luftspalts hin und treten dort in die weichmagnetischen Teile des Stators ein. Hierdurch ergibt sich in dem Luftspalt der elektrische Maschine am Rand des weichmagnetischen Teils des Stators eine Feldkonzentration, sodass hier die Feldstärke des Magnetfelds im Vergleich zu einer elektrischen Maschine gemäß dem Stand der Technik vergrößert ist.

Die erfindungsgemäße Ausgestaltung der elektrischen Maschine lässt sich besonders gut kombinieren mit einem Läufer, dessen magnetisch aktiver Teil selbst für eine weitere Flusskonzentration ausgestaltet ist. Mit anderen Worten findet hier eine Konzentration des magnetischen Flusses schon innerhalb des Läufers selbst statt. Dies wird erreicht, indem die Magnetisierung eines Permanentmagneten nicht in Richtung zum Luftspalt hin, sondern quer dazu ausgerichtet ist. Mit anderen Worten ist die Magnetisierung des Permanentmagneten quer zu einem Normalenvektor des Oberflächenbereichs ausgerichtet, aus welchem der magnetisch aus dem Läufer aus- bzw. in diesen wieder eintritt. Mit einer Ausrichtung quer zum Normalenvektor ist hierbei gemeint, dass der Normalenvektor und die Magnetisierung einen Winkel einschließen, dessen Betrag in einem Bereich von 45° bis 135° Grad, insbesondere in einem Bereich zwischen 75° und 105° Grad liegt. Besonders bevorzugt ist eine senkrechte Ausrichtung. Für den Fall, dass der Läufer als Rotor ausgestaltet ist, also eine zylindrische Grundform aufweist, ergibt sich bei dieser Ausführungsform eine tangential zur Umfangsrichtung des Rotors weisende Magnetisierung der Permanentmagneten und eine in radialer Richtung gerichtete Flusskonzentration.

Durch diese Ausrichtung der Magnetisierung eines Permanentmagneten wird am Nordpol des Permanentmagneten das dort austretende magnetische Feld von dem daran angrenzenden Flussleitelement in Richtung zum Luftspalt hin umgeleitet, wobei sich eine Verdichtung des Magnetfelds ergibt, sodass im Luftspalt ein Magnetfeld mit größerer Flussdichte vorliegt als an der Oberfläche des Permanentmagneten selbst. Entsprechende Verhältnisse ergeben sich am Südpol des Permanentmagneten, wo das Magnetfeld wieder in diesen Eintritt. Durch die Feldkonzentration mittels des magnetisch aktiven Teils des Läufers ist es ermöglicht, auch Magnete mit geringer magnetischer Flussdichte, insbesondere Ferritmagneten, zu verwenden und dennoch die gewünschte hohe Flussdichte im Luftspalt zu erhalten.

Die magnetische Flussdichte im Bereich des Luftspalts ist noch weiter gesteigert, indem das magnetisch aktive Teil des Läufers an seinem über den Stator hinaus stehenden Ende weitere Permanentmagneten aufweist, die ebenfalls an einem der Flussleitelemente angeordnet sind. Die Magnetisierung dieser Permanentmagneten ist dann parallel zu der Erstreckungsrichtung ausgerichtet, entlang welcher der Läufer über den Stator hinausragt. Mit einer Ausrichtung der Magnetisierung parallel zur Erstreckungsrichtung ist hierbei gemeint, dass die Magnetisierung und eine durch die Erstreckungsrichtung definierte Achse einen Winkel einschließen, der betragsmäßig in einem Bereich von 0 bis 45° Grad, insbesondere von 0 bis 15° Grad liegt. Für das Beispiel einer Ausgestaltung des Läufers als Rotor bedeutet dies, dass sich der Rotor in axialer Richtung entlang der Rotationsachse über den Stator hinaus erstreckt und an der Stirnseite des Rotors axial magnetisiertes Permanentmagneten an einem Ende eines Flussleitelements angeordnet sind.

Durch die zusätzlichen Permanentmagneten am Ende des Flussleitelements wird ein zusätzlicher Fluss in das Flussleitelement eingespeist, der ebenfalls in dem Flussleitelement konzentriert und innerhalb des Luftspalts an den Stator übertragen wird. Im Falle der Verwendung von Permanentmagneten mit einer parallel zur Erstreckungsrichtung ausgerichteten Magnetisierung ist es nicht nötig, dass auch die weichmagnetischen Flussleitelemente selbst über den weichmagnetischen Teil des Stators hinausragen.

Es werden an mehreren Flussleitelementen an einem Ende des Läufers jeweils Permanentmagneten angeordnet, die parallel zur Erstreckungsrichtung ausgerichtet sind. Diese Permanentmagneten sind untereinander über ein weichmagnetisches Rückschlusselement miteinander magnetische gekoppelt. Hierdurch wird der Streufluss trotz der zusätzlichen Permanentmagneten gering gehalten.

Die parallel zur Erstreckungsrichtung magnetisierten Permanentmagneten können natürlich an beiden Enden des Läufers angebracht sein, die dann beide in Erstreckungsrichtung über den Stator hinausragen.

Der ebenfalls zu Erfindung gehörige Läufer weist ebenfalls zumindest ein Flussleitelement aufweist, an welches an vier unterschiedlichen Seiten des Flussleitelements jeweils zumindest ein Permanentmagnet angrenzt. Dieses Flussleitelement koppelt dabei die angrenzenden Permanentmagneten mit einem Oberflächenbereich an einer Außenseite des Läufers und zwar derjenigen Außenseite, die im eingebauten Zustand des Läufers den Luftspalt begrenzt. Die an das Flussleitelement angrenzenden Permanentmagneten weisen dabei Magnetisierungen auf, die entweder alle zu dem Flussleitelement hin oder alle von diesen weg weisen. Hierdurch ergibt sich dann an den erwähnten Oberflächenbereichen ein magnetischer Pol des Läufers mit einer besonders großen Flussdichte. Der erfindungsgemäße Läufer ist als Rotor ausgebildet. Dieser weist den folgenden Aufbau auf: In einem Querschnitt senkrecht zur Rotationsachse des Rotors sind tangential zur Umfangsrichtung magnetisierte Permanentmagneten sternförmig um eine Welle des Rotors angeordnet und hierbei zwischen den Permanentmagneten jeweils keilförmige Blechsegmente angeordnet. Hierdurch werden dann die einzelnen Blechsegmente an zwei unterschiedlichen Seiten von einem Permanentmagneten begrenzt. An den Stirnseiten des Rotors sind weitere, axial magnetisierte Permanentmagneten an den Blechsegmenten angeordnet. Hierdurch ergeben sich dann pro Blechsegment jeweils zwei weitere Permanentmagneten, die an das Blechsegment angrenzen, also insgesamt vier pro Blechsegment.

Im Zusammenhang mit der Frage, wie die weichmagnetischen Flussleitelemente des Läufers auszugestalten sind, ist darauf zu achten, dass diese einen magnetischen Fluss auch entlang derjenigen Richtung gut führen können müssen, in welcher der Läufer über den Stator hinausragt, d.h. insbesondere entlang der Rotationsachse bei einem Rotor. Hierzu hat man festgestellt, dass sich als Flussleitelemente Blechpakete eignen, wie sie bei elektrischen Maschinen in Bereichen verwendet werden, in denen Wirbelströme zu unterdrücken sind. Blechpakete werden aus weichmagnetischen Blechen gebildet, die zu dem Blechpaket aufgeschichtet sind, wobei zwischen den einzelnen Blechen eine elektrisch isolierende Schicht zum Blockieren der Wirbelströme vorgesehen ist. Während sich eine gute Leitfähigkeit eines magnetischen Flusses innerhalb eines Bleches von selbst ergibt, ist bei der Führung des magnetischen Flusses quer über mehrere Blechschichten hinweg darauf zu achten, dass die elektrische Isolierung entsprechend dünn auszugestalten ist. Ist dies der Fall, so ist es möglich, beispielsweise in einem Rotor einen magnetischen Fluss sowohl axial als auch radial zu führen und ihn hierbei zu verdichten.

Mit der Erfindung ist es insbesondere möglich, eine elektrische Maschine bereitzustellen, bei welcher eine Polpaarzahl des Läufers kleiner als sechs und ein Betrag der Flussdichte im Luftspalt dennoch im Durchschnitt größer als 0,6 Tesla, sogar größer als 0,7 Tesla, ist. Dies ist insbesondere auch dann möglich, wenn als Permanentmagneten Ferritmagneten vorgesehen sind.

Von der Erfindung sind auch Weiterbildungen des erfindungsgemäßen Läufers umfasst, welche Merkmale umfassen, die bereits im Zusammenhang mit den Weiterbildungen der erfindungsgemäßen elektrischen Maschine beschrieben wurden. Aus diesem Grund sind die entsprechenden Weiterbildungen des erfindungsgemäßen Läufers hier nicht noch einmal beschrieben.

Im Folgenden wird die Erfindung noch einmal anhand eines konkreten Ausführungsbeispiels näher erläutert. Dazu zeigt:
- FIG 1: eine schematische Darstellung einer bevorzugten Ausführungsform der erfindungsgemäßen elektrischen Maschine im Querschnitt,
- FIG 2: eine schematische Darstellung der elektrischen Maschine von FIG 1 im Längsschnitt,
- FIG 3: eine schematische Darstellung einer Außenseite eines Rotors der elektrischen Maschine von FIG 1,
- FIG 4: eine schematische Darstellung elektrischen Maschine in Querschnitt und
- FIG 5: ein Diagramm betreffend eine Flussdichte in Luftspalten unterschiedlicher elektrischer Maschinen.

Bei den im Folgenden erläuterten Beispielen stellen die beschriebenen Komponenten der elektrischen Maschine jeweils einzelne, unabhängig voneinander zu betrachtende Merkmale der elektrischen Maschine dar, welche die elektrischen Maschine jeweils auch unabhängig voneinander weiterbilden und damit auch einzeln oder in einer anderen als der gezeigten Kombination als Bestandteil der Erfindung anzusehen sind.

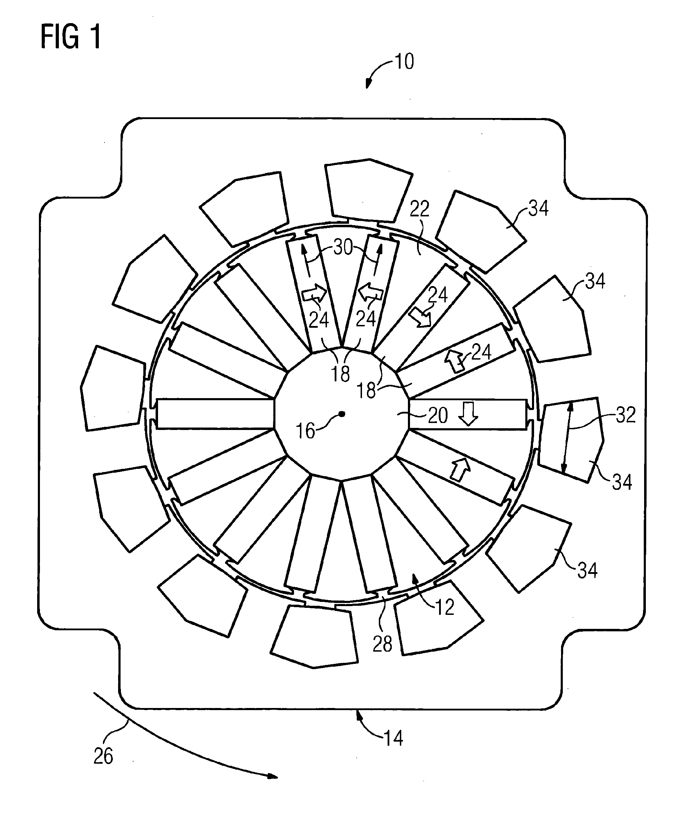

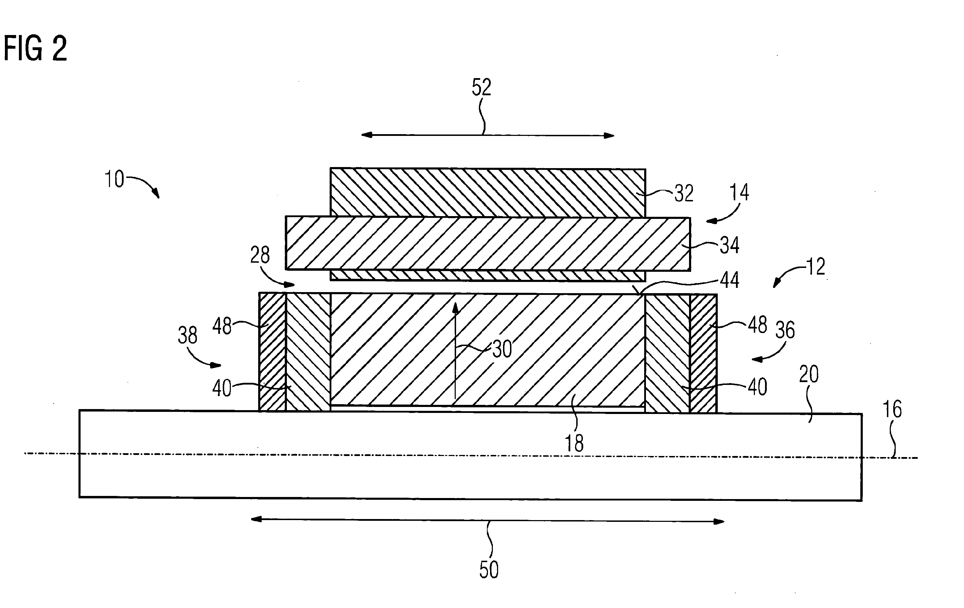

In FIG 1 ist eine elektrische Maschine 10 gezeigt, bei welcher ein Rotor 12 im Inneren eines Stators 14 gelagert ist. FIG 1 zeigt die elektrische Maschine in einem Querschnitt, welcher senkrecht zu einer Rotationsachse 16 des Rotors 12 gebildet ist, wobei die Rotationsachse 16 in FIG 1 senkrecht zur Bildebene verläuft. In FIG 2 ist die elektrische Maschine 10 noch einmal in einem Längsschnitt gezeigt, wobei sich in der Schnittebene die Rotationsachse 16 befindet.

Bei der elektrischen Maschine 10 kann es sich beispielsweise um eine Synchronmaschine oder einen Servomotor handeln. Die elektrische Maschine 10 kann beispielsweise in einem Elektrofahrzeug als Antrieb eingebaut sein.

Der Rotor 12 weist eine zylinderförmige Grundform auf und umfasst Permanentmagneten 18, die sternförmig an einer Welle 20 befestigt sind. Von den Permanentmagneten 18 sind der Übersichtlichkeit halber lediglich einige mit einem Bezugszeichen versehen. Bei den Permanentmagneten 18 kann es sich beispielsweise um Ferritmagneten handeln. Zwischen den einzelnen Permanentmagneten 18 befindet sich jeweils ein Flussleitelement 22, das hier keilförmig ausgebildet ist und insgesamt jeweils ein Profilteil darstellt, das sich parallel zur Rotationsachse 16 erstreckt. Von den Flussleitelementen 22 sind in FIG 1 wieder nur einige mit einem Bezugszeichen versehen. Die Flussleitelemente 22 können jeweils beispielsweise aus einem Blechpaket bestehen.

Die Permanentmagneten 18 sind tangential magnetisiert, d. h. Magnetisierungen 24 sind entlang einer Umfangsrichtung 26 des Rotors 12 ausgerichtet. Jeweils zwei benachbarte Permanentmagneten 18 weisen dabei entgegengesetzte Magnetisierungsrichtungen auf. Durch die Flussleitelemente 22 werden die von den Permanentmagneten 18 erzeugten magnetischen Flüsse zu einem Luftspalt 28 zwischen dem Rotor 12 und dem Stator 14 radial nach außen hin, d.h. bezüglich der Rotationsachse 16 entlang einer radialen Richtung 30 umgeleitet.

Der Stator 14 umfasst eine weichmagnetische Flussleiteinrichtung 32, die beispielsweise in der bekannten Weise aus einem Blechpaket gebildet sein kann. In der Flussleiteinrichtung 32 sind Wicklungen 34 von elektrischen Spulen zum gesteuerten Erzeugen eines magnetischen Drehfelds in der elektrischen Maschine 10 angeordnet. Von den Wicklungen 34 sind in FIG 1 wieder nur einige mit einem Bezugszeichen versehen.

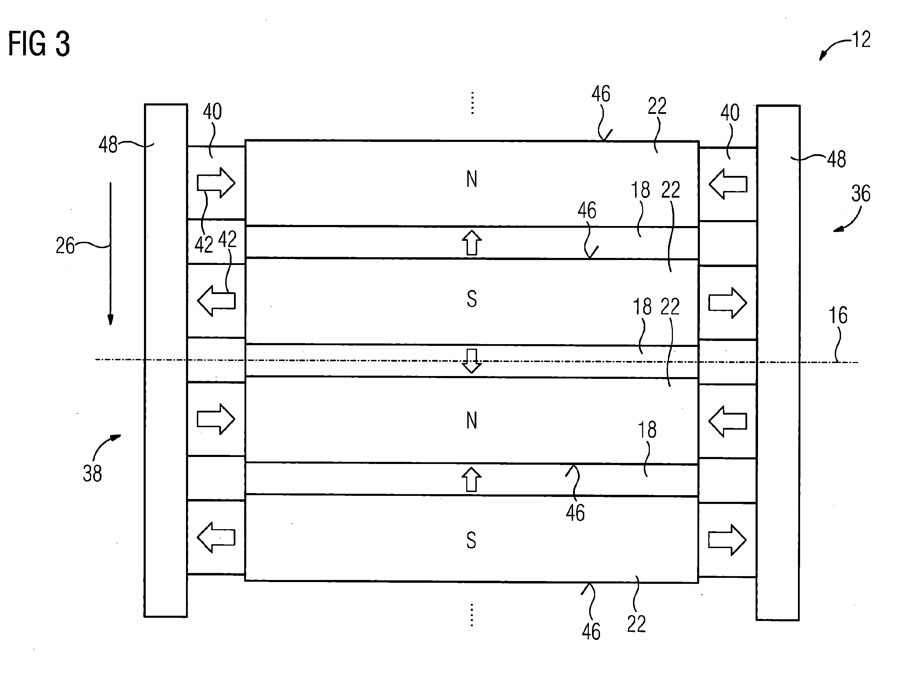

Im Folgenden ist anhand von FIG 2 und FIG 3 der stirnseitige Aufbau des Rotors 12 näher erläutert. An Stirnseiten 36, 38 weist der Rotor 12 weitere Permanentmagneten 40 auf, welche jeweils an eines der Flussleitelemente 22 an dessen axialen Enden angeordnet ist. Die Permanentmagneten 40 können ebenfalls Ferritmagneten sein. Magnetisierungen 42 der Permanentmagneten 40 sind jeweils parallel zur Rotationsachse 16, d.h. axial ausgerichtet. In FIG 3 sind von den Permanentmagneten 40 und deren Magnetisierungsvektoren 42 jeweils nur einige mit einem Bezugszeichen versehen.

Insgesamt ist jedes Flussleitelement 22 des Rotors 12 von vier unterschiedlichen Seiten von Permanentmagneten 18, 40 begrenzt. Dabei weisen die vier angrenzenden Permanentmagneten 18, 40 Magnetisierungen auf, die entweder alle zu dem Flussleitelement 22 hin- oder von diesem weg weisen. Insgesamt ergibt sich so an der Außenseite 44 des Rotors 12 im Luftspalt 28 eine wechselnde Folge von Nordpolen N und Südpolen S an Oberflächen 46 der Flussleitelemente 22 im Luftspalt 28.

Der magnetische Fluss der Permanentmagneten 40 wird auf jeder Stirnseite 36, 38 über Rückschlusselemente 48 aus einem weichmagnetischen Material, beispielsweise aus Eisen, geschlossen. Die Permanentmagneten 18, 40, die Flussleitelemente 22 und die Rückschlusselemente 48 bilden insgesamt den magnetisch aktiven Teil des Rotors 12. Eine Länge 50 des magnetisch aktiven Teils des Rotors 12 in axialer Richtung, d. h. entlang der Rotationsachse 16, ist größer als eine entsprechende Länge 52 des Flussleitelements 32 des Stators 14 in axialer Richtung. Die Flussleitelemente 22 selbst müssen dabei nicht länger als die Flussleiteinrichtung 32 des Stators 14 sein.

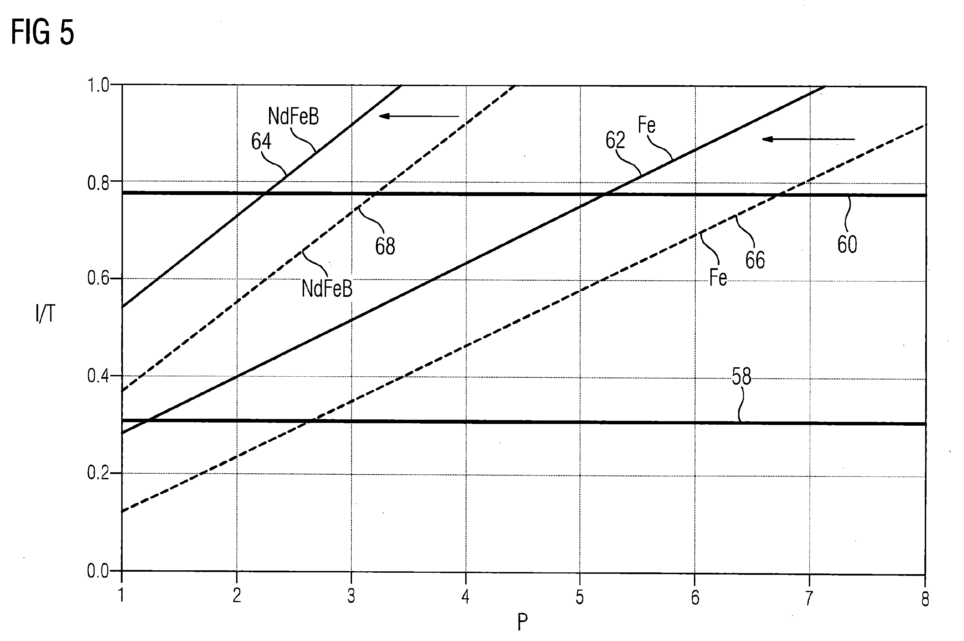

Durch die zusätzlichen Permanentmagneten 40 an den Stirnseiten 36, 38 des Rotors 12 ergibt sich ein größerer magnetischer Fluss im Luftspalt 28, als dies bei einem herkömmlichen Rotor ohne die Permanentmagneten 40 der Fall ist. Um dies zu veranschaulichen, ist in FIG 5 ein Diagramm mit unterschiedlichen Induktionen oder Flussdichten I (hier in Tesla aufgetragen) in Abhängigkeit von der Polpaarzahl P angegeben.

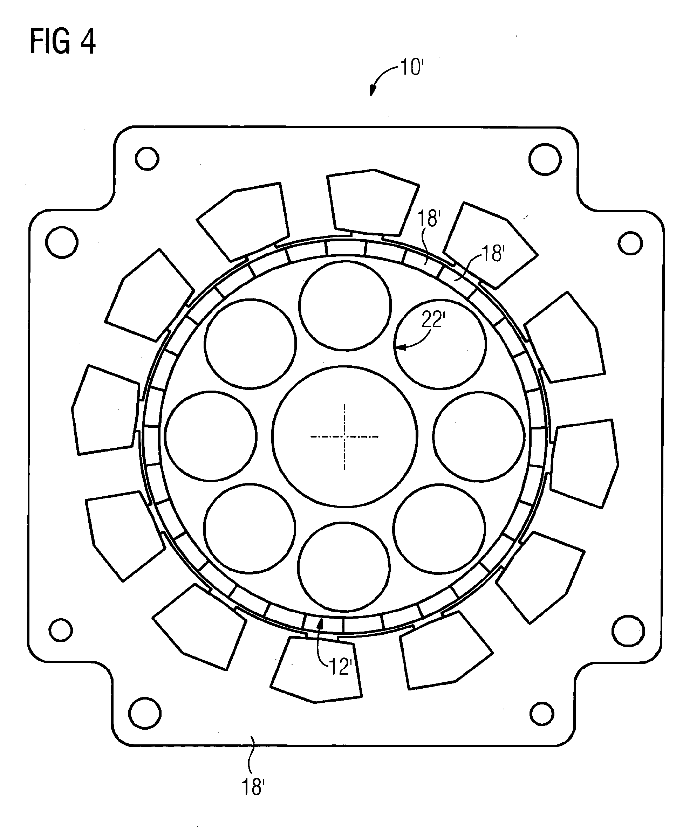

Für das Verständnis des Diagramms sei im Zusammenhang mit FIG 4 noch einmal der herkömmliche Aufbau einer elektrischen Maschine 10' ohne radiale Flusskonzentration und ohne zusätzliche Permanentmagneten an Stirnseiten eines Rotors 12' veranschaulicht. FIG 4 zeigt hierzu einen Querschnitt durch die elektrische Maschine 10', der in derselben Weise wie der Querschnitt von FIG 1 gebildet ist. Der Rotor 12' der elektrischen Maschine 10' ist aus einem weichmagnetischen Kern 22' gebildet, an dessen Umfang Permanentmagneten 18' befestigt sind, die in radialer Richtung nach außen bzw. zur Welle des Rotors 12' hin magnetisiert sind. Hierdurch ergibt sich in der bekannten Weise eine Abfolge von Nord- und Südpolen entlang des Umfangs des Rotors 12'. Die Permanentmagneten 18' können Ferritmagneten oder auch Seltenerdmagneten, beispielsweise aus Neodym-Eisen-Bor (NdFeB), sein. Die Permanentmagneten 18' bedecken den Rotor 52 in Umfangsrichtung vollständig. Deshalb ist die von den Permanentmagneten 18' im Luftspalt der elektrischen Maschine 10' erzeugte magnetische Flussdichte I unabhängig von der Polpaarzahl P der elektrischen Maschine 10'. In FIG 5 ergibt dies einen horizontalen Flussdichteverlauf 58 über der Polpaarzahl P für die elektrischen Maschine 10' bei Verwendung von Ferritmagneten und den entsprechenden Flussdichteverlauf 60 bei Verwendung der erwähnten Seltenerdmagneten.

Bei der erfindungsgemäßen elektrischen Maschine 10 ergibt sich dagegen eine Abhängigkeit der Induktion oder Flussdichte I (in FIG in Tesla angegeben) von der Polpaarzahl P des Rotors 12. Die elektrische Maschine 10 weist bei Verwendung von Ferritmagneten als Permanentmagneten 18, 40 einen Flussdichteverlauf 62 über der Polpaarzahl P auf. Bei Verwendung von Seltenerdmagneten aus NdFeB als Permanentmagneten 18, 40 ergibt sich ein Flussdichteverlauf 64. Zum Vergleich ist jeweils ein Flussdichteverlauf 66, 68 gezeigt, wie er sich ohne die zusätzlichen Permanentmagneten 40 an den Enden 36, 38 des Rotors 12 für unterschiedliche Polpaarzahlen P ergeben würde.

Für den Einsatz als Antrieb in einem Elektrofahrzeug bei den üblichen Drehzahlen (5000 bis 10000 U/min) ist eine Flussdichte oder Induktion von mehr als 0,6 Tesla, bevorzugt ungefähr 0,8 Tesla, im Luftspalt 28 gewünscht. Die elektrische Maschine 10' kann diesen Wert bei Verwendung der Seltenerdmagneten erreichen (siehe den Flussdichteverlauf 60 in FIG 5). Bei der elektrischen Maschine 10 ist ohne die Permanentmagneten 40 eine Polpaarzahl P = 7 nötig, um eine magnetische Flussdichte von 0,8 Tesla mit Ferritmagneten zu erhalten (siehe den Flussdichteverlauf 66 in FIG 5). Die vorliegende Erfindung ermöglicht eine magnetische Luftspaltinduktion I bei geringer Polpaarzahl P. Dazu wird zusätzlich zu der radialen Flusskonzentration eine axiale Konzentration mittels der weiteren Permanentmagneten 40 und ihrer Anordnung an den Flussleitelementen 22 erreicht. Durch diese zusätzliche axiale Flusseinleitung mittels der Permanentmagneten 40 kann die radiale Flusseinleitung reduziert werden, d.h. es ist eine Reduzierung der Polpaarzahl P möglich. In FIG 5 ist gezeigt, dass der Induktionsverlauf 62 bereits bei einer Polpaarzahl P=5 nahe der gewünschten Flussdichte von 0,8 Tesla liegt. Damit sinken die Verlustleistungen, was eine höhere Drehzahl der elektrischen Maschine 10 ermöglicht.

## Patentansprüche

1. Elektrische Maschine (10), bei welcher durch einen Stator (14) und einen Läufer (12) ein Luftspalt (28) begrenzt ist, über welchen der Stator (14) mit einem Magnetfeld eines magnetisch aktiven Teils des Läufers (12) zusammenwirkt, wobei der Läufer (12) als magnetisch aktiven Teil Permanentmagneten (18) sowie zwischen diesen angeordnete weichmagnetische Flussleitelemente (22) umfasst, wobei der magnetisch aktive Teil des Läufers (12) in zumindest einer Erstreckungsrichtung (16) länger als eine weichmagnetische Flussleiteinrichtung (32) eines magnetisch aktiven Teils des Stators (14) in dieser Erstreckungsrichtung (16) ist und der magnetisch aktive Teil des Läufers (12) entlang der Erstreckungsrichtung (16) an seinen Enden an mehreren Flussleitelementen (22) jeweils Permanentmagneten (40) mit einer Magnetisierung (42) aufweist, die parallel zur Erstreckungsrichtung (16) ausgerichtet ist,
**dadurch gekennzeichnet, dass**
die parallel zur Erstreckungsrichtung (16) magnetisierten Permanentmagneten (40) über ein weichmagnetisches Rückschlusselement (48) miteinander magnetisch gekoppelt sind, über welches der magnetische Fluss dieser Permanentmagneten (40) auf einer Stirnseite (36, 38) des Läufers (12) geschlossen ist.

2. Elektrische Maschine (10) nach Anspruch 1, wobei der magnetisch aktive Teil des Läufers (12) eine Flusskonzentration bewirkt und hierzu jeweils das an einen Permanentmagneten (18) angrenzende Flussleitelement (22) dazu ausgelegt ist, den Permanentmagneten (18) mit einem jeweiligen den Luftspalt (28) begrenzenden Oberflächenbereich (46) magnetisch zu koppeln, und der mit dem Oberflächenbereich (46) gekoppelte Permanentmagnet (18) eine Magnetisierung (24) aufweist, die quer, insbesondere senkrecht, zu einem Normalenvektor (30) des Oberflächenbereichs (46) ausgerichtet ist.

3. Elektrische Maschine (10) nach einem der vorhergehenden Ansprüche, wobei der Läufer (12) als Rotor ausgestaltet ist, der eine zylinderförmige Grundform aufweist und wobei eine Verlaufsrichtung der Rotationsachse (16) des Rotors der Erstreckungsrichtung entspricht.

4. Elektrische Maschine (10) nach einem der vorhergehenden Ansprüche, wobei die Flussleitelemente (22) jeweils durch Blechpakete bereitgestellt sind.

5. Elektrische Maschine (10) nach einem der vorhergehenden Ansprüche, wobei als Permanentmagneten (18) Ferritmagneten vorgesehen sind.

6. Elektrische Maschine (10) nach einem der vorhergehenden Ansprüche, wobei eine Polpaarzahl (P) des Läufers (12) kleiner als sechs ist und ein Betrag einer Flussdichte (I) im Luftspalt (28) im Durchschnitt größer als 0,6 Tesla ist.

7. Läufer (12) einer elektrischen Maschine (10), welcher durch Permanentmagneten (18,40) permanenterregt ist und welcher zumindest ein weichmagnetisches Flussleitelement (22) aufweist, an welches an vier unterschiedlichen Seiten des Flussleitelements (22) jeweils einer der Permanentmagneten (18,40) angeordnet ist und welches die angrenzenden Permanentmagneten (18,40) mit einem Oberflächenbereich (46) einer Außenseite (44) des Läufers (12) magnetisch koppelt, wobei die angrenzenden Permanentmagneten (18, 40) Magnetisierungen (24,42) aufweisen, die alle entweder zu dem Flussleitelement (22) hin oder von diesem weg weisen, und hierdurch ein magnetischer Pol (N,S) an dem Oberflächenbereich (46) gebildet ist, wobei der Läufer (12) als Rotor ausgebildet ist und wobei in einem Querschnitt senkrecht zur Rotationsachse (16) des Rotors tangential in Umfangsrichtung (26) magnetisierte Permanentmagneten (18) sternförmig um eine Welle (20) des Rotors angeordnet sind und hierbei jeweils zwischen den Permanentmagneten (18) keilförmige Blechpaketsegmente (22) als die Flussleitelemente (22) angeordnet sind,
**dadurch gekennzeichnet, dass**
an Stirnseiten (36,38) des Rotors (12) axial magnetisierte Permanentmagneten (40) an allen Blechsegmenten (22) angeordnet sind.

## Claims

1. Electric machine (10) bounded in which by a stator (14) and an armature (12) is an air gap (28) via which the stator (14) interacts with a magnetic field of a magnetically active part of the armature (12), wherein the armature (12) includes as the magnetically active part permanent magnets (18) as well as magnetically soft flux conducting elements (22) arranged between them, wherein the magnetically active part of the armature (12) is in at least one direction of extent (16) longer than a magnetically soft flux conducting device (32) of a magnetically active part of the stator (14) in said direction of extent (16) and the magnetically active part of the armature (12) has along the direction of extent (16) at its ends on each of a plurality of flux conducting elements (22) permanent magnets (40) having a magnetisation (42) oriented parallel to the direction of extent (16),
**characterised in that**
the permanent magnets (40) magnetised parallel to the direction of extent (16) are mutually magnetically coupled via a magnetically soft feedback element (48) via which the magnetic flux of said permanent magnets (40) is closed on an end face (36, 38) of the armature (12).

2. Electric machine (10) according to claim 1, wherein the magnetically active part of the armature (12) causes flux concentration and for that purpose in each case the flux conducting element (22) bordering a permanent magnet (18) is designed for magnetically coupling the permanent magnet (18) to a respective surface region (46) bounding the air gap (28), and the permanent magnet (18) coupled to the surface region (46) has a magnetisation (24) oriented transversely, especially perpendicularly, to a normal vector (30) of the surface region (46).

3. Electric machine (10) according to one of the preceding claims, wherein the armature (12) is embodied as a rotor whose basic shape is cylindrical and wherein a direction of the course of the rotational axis (16) of the rotor corresponds to the direction of extent.

4. Electric machine (10) according to one of the preceding claims, wherein the flux conducting elements (22) are in each case provided by core stacks.

5. Electric machine (10) according to one of the preceding claims, wherein ferrite magnets are provided as permanent magnets (18).

6. Electric machine (10) according to one of the preceding claims, wherein a number of pairs of poles (P) of the armature (12) is less than six and a flux density (I) in the air gap (28) measures on average more than 0.6 tesla.

7. Armature (12) of an electric machine (10), which armature is permanently excited by means of permanent magnets (18, 40) and has at least one magnetically soft flux conducting element (22) which is bounded on four different sides by in each case one of the permanent magnets (18, 40) and which magnetically couples the bordering permanent magnets (18, 40) to a surface region (46) of an external side (44) of the armature (12), wherein the bordering permanent magnets (18, 40) have magnetisations (24, 42) that all point either toward the flux conducting element (22) or away from said element, and a magnetic pole (N, S) is formed thereby on the surface region (46), wherein the armature (12) is embodied as a rotor and wherein permanent magnets (18) magnetised tangentially to the circumferential direction (26) are in a cross-section perpendicular to the rotational axis (16) of the rotor arranged radially around a shaft (20) of the rotor and wedge-shaped sheet-metal segments (22) are arranged as the flux conducting elements (22) in each case between the permanent magnets (18),
**characterised in that**
axially magnetised permanent magnets (40) are arranged on end faces (36, 38) of the rotor (12) on all sheet-metal segments (22).

## Revendications

1. Machine ( 10 ) électrique, dans laquelle il est délimité par un stator ( 14 ) et un induit ( 12 ) un entrefer ( 28 ), par lequel le stator ( 14 ) coopère avec un champ magnétique d'une partie active magnétiquement de l'induit ( 12 ), l'induit ( 12 ) comprenant comme partie active magnétiquement des aimants ( 18 ) permanents ainsi que des éléments ( 22 ) de conduite de flux à magnétisme doux disposés entre ceux-ci, la partie active magnétiquement de l'induit ( 12 ) étant, dans au moins une direction ( 16 ) d'étendue plus longue qu'un dispositif ( 32 ) de conduite du flux à magnétisme doux, d'une partie active magnétiquement du stator ( 14 ) dans cette direction ( 16 ) d'étendue et la partie active magnétiquement de l'induit ( 12 ) le long de la direction ( 16 ) d'étendue ayant à ses extrémités, sur plusieurs éléments ( 22 ) de conduite du flux, respectivement des aimants ( 40 ) permanents, ayant une aimantation ( 42 ) qui est dirigée parallèlement à la direction ( 16 ) d'étendue,
**caractérisée en ce que**
les aimants ( 40 ) permanents, aimantés parallèlement à la direction ( 16 ) d'étendue, sont couplés magnétiquement les uns aux autres par un élément ( 48 ) de reflux à magnétisme doux, par lequel le flux magnétique de ces aimants ( 40 ) permanents est fermé sur un côté ( 36, 38 ) frontal de l'induit ( 12 ).

2. Machine ( 10 ) électrique suivant la revendication 1, dans lequel la partie active magnétiquement de l'induit ( 12 ) provoque une concentration de flux et à cet effet respectivement l'élément ( 22 ) de conduite de flux, voisin d'un aimant ( 18 ) permanent, est conçu pour coupler magnétiquement l'aimant ( 18 ) permanent à une zone ( 46 ) de surface respective voisine de l'entrefer ( 28 ) et l'aimant ( 18 ) permanent, couplé à la zone ( 46 ) de surface, a une aimantation ( 24 ), qui est dirigée transversalement, notamment perpendiculairement, à un vecteur ( 30 ) normal à la zone ( 46 ) de surface.

3. Machine ( 10 ) électrique suivant l'une des revendications précédentes, dans lequel l'induit ( 12 ) est conformé en rotor, qui a une forme de base cylindrique et la direction dans laquelle s'étend l'axe ( 16 ) de rotation du rotor correspond à la direction d'étendue.

4. Machine ( 10 ) électrique suivant l'une des revendications précédentes, dans lequel les éléments ( 22 ) de conduite du flux sont ménagés respectivement par des paquets de tôle.

5. Machine ( 10 ) électrique suivant l'une des revendications précédentes, dans lequel il est prévu des aimants de ferrite comme aimants ( 18 ) permanents.

6. Machine ( 10 ) électrique suivant l'une des revendications précédentes, dans lequel un nombre ( P ) de paires de pôles de l'induit ( 12 ) est plus petit que six et une valeur absolue d'une densité ( I ) de flux dans l'entrefer ( 28 ) est en moyenne plus grande que 0,6 Tesla.

7. Induit ( 12 ) d'une machine ( 10 ) électrique, qui est excitée en permanence par des aimants ( 18, 40 ) permanents et qui a au moins un élément ( 22 ) de conduite de flux à magnétisme doux sur lequel, sur quatre côtés différents de l'élément ( 22 ) de conduite de flux, est disposé respectivement l'un des aimants ( 18, 40 ) permanents et qui couple magnétiquement les aimants ( 18, 40 ) permanents voisins à une zone ( 46 ) de surface d'un côté ( 44 ) extérieur de l'induit ( 12 ), les aimants ( 18, 40 ) permanents voisins ayant des aimantations ( 24, 42 ) qui sont toutes dirigées vers l'élément ( 22 ) de conduite de flux ou qui s'en éloignent, et il est formé ainsi un pôle ( N, S ) magnétique à la zone ( 46 ) de surface, l'induit ( 12 ) étant constitué en rotor et dans lequel dans une section transversale perpendiculairement à l'axe ( 16 ) de rotation du rotor, sont montés en étoile autour d'un arbre ( 20 ) du rotor, des aimants ( 18 ) permanents aimantés tangentiellement dans la direction ( 26 ) périphérique et ainsi des segments ( 22 ) de paquets de tôle cunéiformes sont disposés en tant qu'éléments ( 22 ) de conduite du flux entre respectivement les aimants ( 18 ) permanents,
**caractérisé en ce que**,
sur des côtés ( 36, 38 ) frontaux de l'induit ( 12 ), les aimants ( 40 ) permanents à magnétisation axiale sont disposés sur tous les segments ( 22 ) de tôle.
